# EUROPEAN PATENT SPECIFICATION

(11) **EP 2 652 000 B1**
(45) Date of publication and mention of the grant of the patent: **25.05.2016**
(21) Application number: 11806087.0
(22) Date of filing: 15.12.2011
(51) Int. Cl.: C08G 18/40, C08G 18/42, C08G 18/48, C08G 18/54, C08G 18/76

(54) **POLYURETHANE AND POLYISOCYANURATE FOAMS**
POLYURETHAN- UND POLYISOCYANURATSCHÄUME
MOUSSES DE POLYURÉTHANNE ET DE POLYISOCYANURATE

(30) Priority: 16.12.2010 US 423817 P
(43) Date of publication of application: 23.10.2013
(73) Proprietor: Dow Global Technologies LLC, Midland, MI 48674 (US)
(72) Inventor: PELLACANI, Luigi, 41012 Carpi (IT); GOLINI, Paolo, 42100 Reggio Emilia (IT); KELLER, Peter, 48565 Steinfurt (DE)
(74) Representative: Beck Greener
(86) International application number: PCT/US2011/065195
(87) International publication number: WO 2012/083038

(56) References cited:
- EP-A1- 1 435 366
- WO-A1-2010/114703

## Description

### BACKGROUND OF THE INVENTION

### 1. Field of the Invention

Embodiments of the invention relate to polyurethane and polyisocyanurate foams. More particularly, the embodiments relate to such foams prepared from aromatic polyester polyols that show improved processability over a range of thicknesses.

### 2. Background of the Art

Polyurethane and polyisocyanurate foams are widely used as insulating materials in the construction industry. Typically these foams are closed-cell, rigid foams containing a low-conductivity gas in the cells, such as a hydrocarbon like pentane. The foaming compositions, being liquids, may be used in pour-in-place applications to form rigid foam boards or panels. The panels, which may be produced via continuous or discontinuous process technology, may include a facing, such as a metal foil, to which the foam adheres. These panels may be referred to as sandwich panels.

The foams used in producing such polyisocyanurate cored sandwich panels may exhibit poor curing performance, resulting in defects such as shrinkage and deformation.

Therefore, there is a need for polyurethane and polyisocyanurate foams exhibiting improvements in curing.

WO 2010/114703 A1 discloses a formulation to prepare a low- to medium-index (i.e., 1 to 2.5) polyurethane or polyisocyanurate foam, which includes from 20 to 60 percent by weight of a formulated polyol comprising an aromatic polyester polyol having a functionality greater than or equal to 2 and a hydroxyl number greater than 50 mg KOH/g; from 10 to 30 percent by weight of a Novolac-type polyol; and from 5 to 40 percent by weight of a sucrose- or sorbitol-initiated polyether polyol having a hydroxyl number greater than 200 mg KOH/g and a functionality of at least 4.

### SUMMARY OF THE INVENTION

Embodiments of the invention provide for polyurethane or polyisocyanurate foam formulations. The formulations include a formulated polyol, a polyisocyanate, and a blowing agent such that the isocyanate index is above 270. The formulated polyol includes (i) from 20 to 60 percent by weight of an aromatic polyester polyol having a hydroxyl number greater than 50 mg KOH/g, a functionality of at least 2 and an acid component comprising at least 30 percent by weight of phthalic acid residues, or residues of isomers thereof, (ii) from 10 to 30 percent by weight of a Novolac-type polyether polyol having a hydroxyl number greater than 100 mg KOH/g and a functionality of at least 2.2, and (iii) from 5 to 40 percent by weight of a polyether polyol including a sucrose- or sorbitol-initiated polyol, having an average hydroxyl number greater than 200 mg KOH/g and an average functionality of at least 4. All percentages are based on the weight of the formulated polyol as a whole, and components (i), (ii), and (iii) are selected so that the formulated polyol as a whole has an average functionality of at least 2.4.

Embodiments of the invention also provide for methods of preparing polyurethane or polyisocyanurate foams. The methods include contacting, under foam-forming conditions, a formulated polyol, a polyisocyanate, and a blowing agent at an isocyanate index of more than 270. The formulated polyol includes (i) from 20 to 60 percent by weight of an aromatic polyester polyol having a hydroxyl number greater than 50 mg KOH/g, a functionality of at least 2 and an acid component comprising at least 30 percent by weight of phthalic acid residues, or residues of isomers thereof, (ii) from 10 to 30 percent by weight of a Novolac-type polyether polyol having a hydroxyl number greater than 100 mg KOH/g and a functionality of at least 2.2, and (iii) from 5 to 40 percent by weight of a polyether polyol including a sucrose- or sorbitol-initiated polyol, having an average hydroxyl number greater than 200 mg KOH/g and an average functionality of at least 4. All percentages are based on the weight of the formulated polyol as a whole, and components (i), (ii), and (iii) are selected so that the formulated polyol as a whole has an average functionality of at least 2.4.

### DETAILED DESCRIPTION OF THE EMBODIMENTS

Embodiments of the invention offer both process and property improvements that are advantageous in the polyurethane and polyisocyanurate cored sandwich panels industry As used herein, the term "polyurethane and polyisocyanurate" includes both polyisocyanurate foams as well as urethane-modified polyisocyanurate (PU-PIR) foams prepared by reacting an isocyanate with an isocyanate-reactive component, such that the ratio of isocyanate groups to isocyanate-reactive groups is 1.8 or higher, and in the presence of suitable catalysts that favor isocyanurate ring formation reaction.

### Formulated Polyol

### 1) Aromatic polyester polyol

The first component is an aromatic polyester polyol. As used herein, "aromatic" refers to organic compounds having at least one conjugated ring of alternate single and double bonds, which imparts an overall stability to the compounds. The term "polyester polyol" as used herein includes any minor amounts of unreacted polyol remaining after the preparation of the polyester polyol and/or unesterified polyol (for example, glycol) added in the reactor as part of the preparation process of the polyester polyol. The aromatic polyester polyol may be obtained by the transesterification of crude reaction residues or scrap. While the aromatic polyester polyol may be prepared from substantially pure reactant materials, more complex starting materials, such as polyethylene terephthalate, may be used. Other residues that may be used are dimethyl terephthalate (DMT) process residues, which are waste or scrap residues from the manufacture of DMT.

The aromatic polyester polyol may optionally contain, for example, halogen atoms and/or may be unsaturated, and may generally be prepared from the same selection of starting materials as described hereinabove, but at least the polycarboxylic acid comprises at least 30 percent by weight of phthalic acid residues, or residues of isomers thereof.

The aromatic polyester polyol is also characterized in that it has a hydroxyl number of greater than 50 mg KOH/g, and a functionality that is equal to or greater than 2. In some embodiments, the hydroxyl number ranges from greater than 50 to 400 mg KOH/g, and in other embodiments the hydroxyl number ranges from 150 to 350 mg KOH/g. The functionality may range from 2 to 8, and in still other non-limiting embodiments may range from 2 to 6.

### 2) Novolac-type polyether polyol

The second component is a Novolac-type polyether polyol. Novolac-type polyether polyols are the alkoxylation products of a phenol-formaldehyde resin, which is formed by the reaction of phenol with formaldehyde in the presence of an acid catalyst, such as glacial acetic acid, followed by concentrated hydrochloric acid. Usually a small amount of the acid catalyst or catalysts is/are added to a miscible phenol, such as p-toluenesulfonic acid, followed by formaldehyde. The formaldehyde will react between two phenols to form a methylene bridge, creating a dimer by electrophilic aromatic substitution between the ortho and para positions of phenol and the protonated formaldehyde. This dimer is bisphenol F. Another example is bisphenol A, which is the condensation product of acetone with two phenols. As concentration of dimers increase, trimers, tetramers and higher oligomers may also form. However, because the molar ratio of formaldehyde to phenol is controlled at somewhat less than 1, polymerization is not completed. Thus, the Novolac may then be alkoxylated to build molecular weight to a desired level, desirably from 300 to 2000, and in certain non-limiting embodiments, from 500 to 1500.

Phenols which may be used to prepare the Novolac initiator include: o-, m-, or p-cresols, ethylphenol, nonylphenol, p-phenylphenol, 2,2-bis(4-hydroxyphenol) propane, beta-naphthol, beta-hydroxyanthracene, p-chlorophenol, o-bromophenol, 2,6-dichlorophenol, p-nitrophenol, 4-nitro-6-phenylphenol, 2-nitro-4-methylphenol, 3,5-dimethylphenol, p-isopropylphenol, 2-bromo-4-cyclohexyl phenol, 4-t-butylphenol, 2-methyl-4-bromophenol, 2-(2-hydroxypropyl)phenol, 2-(4-hydroxyphenol)ethanol, 2-carbethoxyphenol, 4-chloro-methylphenol, and mixtures thereof. In some embodiments, the phenols used to prepare the Novolac-type polyether polyols be unsubstituted.

Suitable Novolac-type polyether polyols may be produced, for example, by reacting a condensate adduct of phenol and formaldehyde with one or more alkylene oxides including ethylene oxide, propylene oxide, and butylene oxide. Such polyols, sometimes referred to as Novolac-initiated polyols, are known to those skilled in the art, and may be obtained by methods such as are disclosed in, for example, U.S. Patents. 2,838,473; 2,938,884; 3,470,118; 3,686,101; and 4,046,721. Typically, Novolac starting materials are prepared by reacting a phenol (for example, a cresol) with formaldehyde where the molar ratio of formaldehyde to phenol of less than one, in the presence of an acidic catalyst to form a polynuclear condensation product containing from 2.1 to 12, such as from 2.2 to 6, or from 2.5 to 4.5 phenol units per molecule. The Novolac resin is then reacted with an alkylene oxide such as ethylene oxide, propylene oxide, butylene oxide, or isobutylene oxide to form an oxyalkylated product containing a plurality of hydroxyl groups. Certain embodiments encompass, Novolac polyols which have an average of from 2.2 to 6 hydroxyl moieties per molecule and an average hydroxyl number of from 100 to 400 mg KOH/g, or from 100 to 300 mg KOH/g.

### 3) Sucrose- or sorbitol-initiated polyol

A third required component of the formulated polyol is a sucrose- and/or sorbitol-initiated polyol. This polyol is a polyether polyol, having an average hydroxyl number of greater than 200 mg KOH/g. The nominal functionality of pure sucrose initiated polyol is 8, and for pure sorbitol initiated polyol the nominal functionality is 6. Embodiments of the invention encompass initiator mixtures which include, in addition to sucrose- and/or sorbitol, diols or triols (initiated respectively, for example, by water or by glycerine) such that the initiator mixtures have an average functionality ranging from 4 to 7.0.

Sucrose may be obtained from sugar cane or sugar beets, honey, sorghum, sugar maple, fruit, and the like. Means of extraction, separation, and preparation of the sucrose component vary depending upon the source, but are widely known and practiced on a commercial scale by those skilled in the art.

Sorbitol may be obtained via the hydrogenation of D-glucose over a suitable hydrogenation catalyst. Fixed beds and similar types of equipment are especially useful for this reaction. Suitable catalysts may include, for example, Raney™ (Grace-Davison) catalysts, such as employed in Wen, Jian-Ping, et. Al. "Preparation of sorbitol from D-glucose hydrogenation in gas-liquid-solid three-phase flow airlift loop reactor," The Journal of Chemical Technology and Biotechnology, vol. 4, pp. 403-406 (Wiley Interscience, 2004). Nickel-aluminum and ruthenium-carbon catalysts are just two of the many possible catalysts.

In an alternative embodiment, preparation of sorbitol may begin with a starch hydrolysate which has been hydrogenated. The starch is a natural material derived from corn, wheat and other starch-producing plants. To form the hydrolysate, the starch polymer molecule may be broken into smaller oligomers at the ether bond between glucose rings, to produce glucose, maltose and higher molecular weight oligo- and polysaccharides. The resulting molecules, having hemiacetal glucose rings as end units, may then be hydrogenated to form sorbitol, maltitol and hydrogenated oligo-and polysaccharides. Hydrogenated starch hydrolysates are commercially available and inexpensive, often in the form of syrups, and provide the added benefit of being a renewable resource. This method may further require a separation of either the glucose, prior to hydrogenation, or of the sorbitol after hydrogenation, in order to prepare a suitable sorbitol-initiated polyol therefrom. In general, the hydrogenation reduces or eliminates the end units' tendency to form the hydroxyaldehyde form of glucose. Therefore, fewer side reactions of the sorbitol, such as Aldol condensation and Cannizzaro reactions, may be encountered. Furthermore, the final polyol will comprise reduced amounts of by-products.

The sucrose- or sorbitol-initiated polyol may be made by polymerizing alkylene oxides onto the specified initiator in the presence of a suitable catalyst. The specified initiator may be the pure sucrose or sorbitol initiator, or it may be a blend of sucrose and/or sorbitol plus one or more other co-initiators, the latter having the purpose of allowing to adjust the final average functionality of the resulting polyether polyol. Possible co-initiators are water, short chain diols such as monoethylene glycol, diethylene glycol, polyethylene glycol, or triols such as glycerin or trimethylolpropane. In one embodiment, each of the initiators may be individually alkoxylated in separate reactions and the resulting polyols blended to achieve the desired component of the formulated polyol. In another embodiment, the initiators may be mixed together prior to alkoxylation, thereby serving as co-initiators, prior to preparing the polyol component having a target hydroxyl number and functionality.

To accomplish the alkoxylation, the alkylene oxide or mixture of alkylene oxides may be added to the initiator(s) in any order, and can be added in any number of increments or added continuously. Adding more than one alkylene oxide to the reactor at a time results in a block having a random distribution of the alkylene oxide molecules, a so-called heteric block. To make a block polyoxy-alkylene of a selected alkylene oxide, a first charge of alkylene oxide is added to an initiator molecule in a reaction vessel. After the first charge, a second charge can be added and the reaction can go to completion. Where the first charge and the second charge have different relative compositions of alkylene oxides, the result is a block polyoxyalkylene. It is possible to make block polyols in this fashion where the blocks thus formed are either all ethylene oxide, or all propylene oxide, or all butylene oxide, but intermediate compositions are also possible. The blocks can be added in any order, and there may be any number of blocks. For example, it is possible to add a first block of ethylene oxide, followed by a second block of propylene oxide. Alternatively, a first block of propylene oxide may be added, followed by a block of ethylene oxide. Third and subsequent blocks may also be added. The composition of all the blocks is to be chosen so as to give the final material the properties required for its intended application.

### The Blowing Agent(s)

Also included in the polyol composition is a chemical blowing agent, which may be selected based in part upon the desired density of the final foam. In certain non-limiting embodiments hydrocarbon blowing agents may be selected. For example, hydrocarbon or fluorine-containing hydrohalocarbon blowing agents may be used, and in some instances may serve to reduce, or further reduce, viscosity, and thereby to enhance processability. Among these are, for example, butane, isobutane, 2,3-dimethylbutane, n- and i-pentane isomers, hexane isomers, heptane isomers, cycloalkanes including cyclopentane, cyclohexane, cycloheptane, and combinations thereof, HFC-245fa (1,1,1,3,3-pentafluoropropane), HFC-365mfc (1,1,1,3,3-pentafluorobutane), HFC-227ea (1,1,1,2,3,3,3-heptafluoropropane), HFC-134a (1,1,1,2-tetrafluoroethane), combinations of two or more of the above, and the like. These hydrocarbons and/or non-fluorine-containing hydrohalocarbons may be used in an amount such that the total blowing agent, including the hydrofluorocarbon, is no more than about 20 parts, or no more than about 15 parts, based on 100 parts of the total polyol composition.

An optional chemical blowing agent that may be selected is formic acid or another carboxylic acid. The formic acid may be used in an amount of from about 0.5 to about 8 parts per 100 parts by weight of the polyol composition. In certain non-limiting embodiments, the formic acid is present in an amount from about 0.5 parts and or from about 1 part, up to about 6 parts or to about 3.5 parts by weight. It is also contemplated that other aliphatic mono- and polycarboxylic acids may be employed, such as those disclosed in U.S. Patent 5,143,945, which is incorporated herein by reference in its entirety, and including isobutyric acid, ethylbutyric acid, ethylhexanoic acid, and combinations thereof.

In addition to, or in lieu of, the formic acid or other carboxylic acid blowing agent, water may also be optionally selected as a chemical blowing agent. The water is, in some non-limiting embodiments, present in an amount of from about 0.5 to about 10 parts, or from about 0.7 to about 5 parts, per 100 parts by weight of the formulated polyol. In some non-limiting embodiments, when preparing a polyurethane or polyisocyanurate foam, in order to facilitate and give desirable processing characteristics, the amount of water used may not exceed 4 parts of water, or not more than 2.5 parts of water, or not more than 1.5 parts of water, per 100 parts of polyol composition. Omission of water is desirable in some non-limiting embodiments.

Finally, carbamates, which release carbon dioxide during the foaming process, and their adducts may also be used advantageously as an optional, additional chemical blowing agent. Such are discussed in greater detail in, for example, U.S. Patents 5,789,451 and 6,316,662, and EP 1 097 954.

### Proportions in Formulated Polyol

The three minimum required components of the formulated polyol (not including blowing agent(s)) are, in certain non-limiting embodiments, present in specific proportion ranges in order to improve their storage stability after they are combined. While the aromatic polyester polyol may range from 20 to 60 percent by weight, based on the weight of the formulated polyol as a whole, the Novolac-type polyether polyol may range from 10 to 30 weight percent by weight, such as for example from 20 to 30 percent by weight. It is desirable in some embodiments that the aromatic polyester polyol be limited to a range from 20 to 40 percent by weight. The sucrose- or sorbitol-initiated polyol may be present in an amount ranging from 5 to 40 percent by weight, on the same basis. Combinations of more than one of each type of polyol may also be selected, provided their combined percentages in the formulated polyol as a whole comply with the stated ranges. Furthermore, the aromatic polyester polyol, the Novolac-type polyether polyol, the sucrose- or sorbitol-initiated polyol fraction as well as the remaining polyether polyol fraction, may be selected so that the formulated polyol as a whole has an average functionality of at least 2.4, or at least 2.5. The hydrocarbon or hydrohalocarbon blowing agent, whether included in the formulated polyol or introduced separately during the foam preparation, is desirably present in an amount from 2 to 20 parts, based on 100 parts of the formulated polyol, and more desirably in an amount from 2 to 15 parts on the same basis.

### The Polvisocyanate

In order to prepare a polyurethane or polyisocyanurate foam according to embodiments of the invention, the polyol composition is reacted with a suitable stoichiometric excess of a polyisocyanate component under appropriate foam-forming conditions. The polyisocyanate component is referred to in the United States as the "A-component" (in Europe, as the "B-component"). Selection of the A-component may be made from a wide variety of polyisocyanates, including but not limited to those that are well known to those skilled in the art. For example, organic polyisocyanates, modified polyisocyanates, isocyanate-based prepolymers, and mixtures thereof may be employed. These may further include aliphatic and cycloaliphatic isocyanates, and in particular aromatic and, more particularly, multifunctional aromatic isocyanates. Polyphenyl polymethylene polyisocyanates (PMDI) may also be used.

Other polyisocyanates useful in the present invention include 2,4- and 2,6-toluenediisocyanate and the corresponding isomeric mixtures; 4,4'-, 2,4'- and 2,2'-diphenyl-methanediisocyanate and the corresponding isomeric mixtures; mixtures of 4,4'-, 2,4'- and 2,2'-diphenyl-methanediisocyanates and polyphenyl polymethylene polyisocyanates (PMDI); and mixtures of PMDI and toluene diisocyanates. Also useful herein are aliphatic and cycloaliphatic isocyanate compounds, such as 1,6-hexamethylenediisocyanate;1-isocyanato-3,5,5-trimethyl-1,3-isocyaantomethylcyclohexane; 2,4- and 2,6-hexahydrotoluene-diisocyanate and their corresponding isomeric mixtures; and 4,4'-, 2,2'- and 2,4'-dicyclohexyl-methanediisocyanate and their corresponding isomeric mixtures. Also useful in the present invention is 1,3-tetramethylene xylene diisocyanate.

Also advantageously used for the A-component are the so-called modified multifunctional isocyanates, that is, products which are obtained through chemical reactions of the above diisocyanates and/or polyisocyanates. Exemplary are polyisocyanates containing esters, ureas, biurets, allophanates and, preferably, carbodiimides and/or uretonomine, and isocyanurate and/or urethane group-containing diisocyanates or polyisocyanates. Liquid polyisocyanates containing carbodiimide groups, uretonomine groups and/or isocyanurate rings, having isocyanate groups (NCO) contents of from 120 to 40 weight percent, or from 20 to 35 weight percent, can also be used. These include, for example, polyisocyanates based on 4,4'- 2,4'- and/or 2,2'-diphenylmethane diisocyanate and the corresponding isomeric mixtures, 2,4- and/or 2,6-toluenediisocyanate and the corresponding isomeric mixtures; mixtures of diphenylmethane diisocyanates and PMDI; and mixtures of toluenediisocyanates and PMDI and/or diphenylmethane diisocyanates.

Suitable prepolymers for use as the polyisocyanate component of the formulations of the present invention are prepolymers having NCO contents of from 2 to 40 weight percent, or from 4 to 30 weight percent. These prepolymers are prepared by reaction of the di- and/or poly-isocyanates with materials including lower molecular weight diols and triols, but also can be prepared with multivalent active hydrogen compounds such as di- and tri-amines and di- and tri-thiols. Individual examples include aromatic polyisocyanates containing urethane groups, which may have NCO contents of from 5 to 40 weight percent, or 20 to 35 weight percent, obtained by reaction of diisocyanates and/or polyisocyanates with, for example, polyols such as lower molecular weight diols, triols, oxyalkylene glycols, dioxyalkylene glycols, or polyoxyalkylene glycols having molecular weights up to about 800. These polyols can be employed individually or in mixtures as di- and/or polyoxyalkylene glycols. For example, diethylene glycols, dipropylene glycols, polyoxyethylene glycols, ethylene glycols, propylene glycols, butylene glycols, polyoxypropylene glycols and polyoxypropylene polyoxyethylene glycols can be used. Polyester polyols can also be used, as well as alkyl diols such as butane diol. Other diols also useful include bishydroxyethyl- or bishydroxypropyl-bisphenol A, cyclohexane dimethanol, and bishydroxyethyl hydroquinone.

Useful as the polyisocyanate component of prepolymer formulations that may be employed in the present invention are the same materials that have been previously mentioned as suitable polyisocyanates.

PMDI in any of its forms may be used as polyisocyanate for use with the embodiments of the invention. When used, it may have an equivalent weight between 125 and 300, such as from 130 to 175, and an average functionality of greater than about 1.5. Embodiments encompass an average functionality of from 1.75 to 3.5. The viscosity of the polyisocyanate component may be from 25 to 5,000 centipoise (cP) (0.025 to about 5 Pa*s), but values from 100 to 1,000 cP at 25°C (0.1 to 1 Pa*s) are may be contemplated for ease of processing. Embodiments encompass similar viscosities where alternative polyisocyanate components are selected. In some embodiments, the polyisocyanate component of the formulations of the present invention is selected from the group consisting of MDI, PMDI, an MDI prepolymer, a PMDI prepolymer, a modified MDI, and mixtures thereof.

For the purposes of the embodiments of the invention, the isocyanate index ratio of the A-component to the B-component (polyisocyanate to formulated polyol) is more than 270, namely, depending on the convention used, more than 2.7, that is to say, the foam is prepared by reaction of at least 2.7 NCO groups per each isocyanate-reactive group.

### Optional Formulation Components

Other polyols may also be included in the formulated polyol and/or in the final formulation, in addition to the three denoted hereinabove as required, and, if included, are considered to be part of the formulation's B-component. While these additional materials are typically included as part of the B-component during the formulating process, such are treated here separately because they are considered to be optional. The other polyols may be selected in a manner so that the formulated polyol as a whole has an average functionality of at least 2.4 (excluding the functionality contribution coming from the presence of water in the foam forming formulation). Embodiments include average functionalities of at least 2.5, 2.6, 2.7. 2.8, 2.9, 3.0, 3.1, 3.2 or at least 3.3. Other polyols may include one or more other polyether or polyester polyols of the kind typically employed in processes to make polyurethane and/or polyisocyanurate foams. Other compounds having at least two isocyanate-reactive hydrogen atoms may also be present, for example, polythioether polyols, polyester amides and polyacetals containing hydroxyl groups, aliphatic polycarbonates containing hydroxyl groups, amine terminated polyoxyalkylene polyethers, and preferably, polyester polyols, polyoxyalkylene polyether polyols, and graft dispersion polyols. Mixtures of two or more of the aforesaid materials may also be employed. In many embodiments such polyols have from 2 to 8 hydroxyl groups per molecule, and a hydroxyl number of greater than 100 mg KOH/g, and in certain embodiments, greater than 300 mg KOH/g.

In some non-limiting embodiments, the formulated polyol may also include one or more chain extenders and/or crosslinkers. Where selected, chain extenders may be bifunctional, low molecular weight alcohols, in particular those having a molecular weight of up to 400, for example ethylene glycol, propylene glycol, butanediol, hexanediol, and mixtures thereof. Crosslinkers, in many embodiments, are at least trifunctional, and may be selected from, for example, low molecular weight alcohols such as glycerol, trimethylolpropane, pentaerythritol, sucrose, sorbitol, or mixtures thereof.

The formulation of the present invention may include further additives or modifiers such as are well-known in the art. For example, surfactants, catalysts, flame retardants, and/or fillers may be employed. Of particular significance are one or more trimerization catalysts. The trimerization catalyst employed may be any known to those skilled in the art that will catalyze the trimerization of an organic isocyanate compound to form the isocyanurate moiety. For typical isocyanate trimerization catalysts, see The Journal of Cellular Plastics, November/December 1975, page 329: and U.S. Patents 3,745,133; 3,896,052; 3,899,443; 3,903,018; 3,954,684 and 4,101,465. Typical trimerization catalysts include the glycine salts, tertiary amine trimerization catalysts, alkali metal carboxylic acid salts, and mixtures of these classes of catalysts. Suitable trimerization catalysts include sodium N-2-hydroxy-5-nonylphenyl-methyl-N-methylglycinate. Also included are the epoxides disclosed in U.S. Patent 3,745,133. Trimerization catalysts are available from for example Air Products under the trade names DABCO K2097, DABCO K15, DABCO TMR, and CURITHANE 52.

Another category of catalysts that may be included is the amine catalysts, including any organic compound which contains at least one tertiary nitrogen atom and is capable of catalyzing the hydroxyl/isocyanate reaction between the A-component and B-component. Typical classes of amines include the N-alkylmorpholines, N-alkyl-alkanolamines, N,N-dialkylcyclohexylamines, and alkylamines where the alkyl groups are methyl, ethyl, propyl, butyl and isomeric forms thereof, and heterocyclic amines. Typical but non-limiting thereof are triethylenediamine, tetramethylethylenediamine, bis(2-dimethylaminoethyl)ether, triethylamine, tripropylamine, tributylamine, triamylamine, pyridine, quinoline, dimethylpiperazine, piperazine, N,N-dimethylcyclohexylamine, N-ethyl-morpholine, 2-methylpropanediamine, methyltriethyl-enediamine, 2,4,6-tridimethylaminomethyl)phenol, N,N',N"-tris(dimethylamino-propyl)sym-hexahydrotriazine, and mixtures thereof. The tertiary amines from which selection may be made may inlcude bis(2-dimethylamino-ethyl)ether, dimethylcyclohexylamine, N,N-dimethylethanolamine, triethylenediamine, triethylamine, 2,4,6-tri(dimethylaminomethyl)phenol, N,N',N-ethylmorpholine, and mixtures thereof.

Non-amine catalyst may also be used in the present invention. Typical of such catalysts are organometallic compounds of bismuth, lead, tin, titanium, iron, antimony, uranium, cadmium, cobalt, thorium, aluminum, mercury, zinc, nickel, cerium, molybdenum, vanadium, copper, manganese, zirconium, and combinations thereof. Included for illustrative purposes only are bismuth nitrate, lead 2-ethylhexoate, lead benzoate, lead naphthenate, ferric chloride, antimony trichloride, antimony glycolate, combinations thereof, and the like. Embodiments include the stannous salts of carboxylic acids, such as stannous acetate, stannous octoate, stannous 2-ethylhexoate, 1-methylimidazole, and stannous laurate, as well as the dialkyl tin salts of carboxylic acids, such as dibutyl tin diacetate, dibutyl tin dilaurate, dibutyl tin dimaleate, dioctyl tin diacetate, combinations thereof, and the like. Catalysts, such as NIAX^{T}A-1, POLYCAT 9 and/or POLYCAT 77. (NIAX A-1 is available from Momentive Performance Materials. POLYCAT 9 and POLYCAT 77 are available from Air Products and Chemicals, Inc.) Additional catalysts, such as TOYOCAT^{™} DM 70, POLYCAT 8, or other gelling catalysts. (TOYOCAT^{™} DM 70 is available from Tosoh Corporation.) The catalysts may be included in amounts from about 0.5 to about 8 parts, total, of B-component.

While the basic formulation enables preparation of foams having improved fire behavior, as defined herein below, in some embodiments it may be desirable to further enhance fire performance by including, as additives, one or more halogenated or non-halogenated flame retardants, such as tris(2-chloroethyl)phosphate, tris-ethyl-phosphate, tris(2-chloro-propyl)phosphate, tris(1,3-dichloropropyl)phosphate, diammonium phosphate, various halogenated aromatic compounds, antimony oxide, alumina trihydrate, polyvinyl chloride, and combinations thereof. Dispersing agents, cell stabilizers, and surfactants may also be incorporated into the formulations.

Surfactants, including organic surfactants and silicone based surfactants, may be added to serve as cell stabilizers. Some representative materials are sold under the designations SF-1109, L-520, L-521 and DC-193, which are, generally, polysiloxane polyoxylalkylene block copolymers, such as those disclosed in U.S. Patents 2,834,748; 2,917,480; and 2,846,458. Also included are organic surfactants containing polyoxyethylene-polyoxybutylene block copolymers, as are described in U.S. Patent 5,600,019. It is particularly desirable to employ a minor amount of a surfactant to stabilize the foaming reaction mixture until it cures. Other surfactants include polyethylene glycol ethers of long-chain alcohols, tertiary amine or alkanolamine salts of long-chain allyl acid sulfate esters, alkylsulfonic esters, alkyl arylsulfonic acids, and combinations thereof.

Such surfactants are employed in amounts sufficient to stabilize the foaming reaction against collapse and the formation of large uneven cells. Typically, from about 0.2 to about 3 parts of the surfactant per 100 parts by weight of the formulated polyol are sufficient for this purpose.

Other additives may include, but are not limited to, carbon black and colorants, fillers and pigments. Examples may include barium sulfate, calcium carbonate, graphite, carbon black, titanium dioxide, iron oxide, microspheres, alumina trihydrate, wollastonite, prepared glass fibers (dropped or continuous), and polyester fibers and other polymeric fibers, as well as various combinations thereof.

### Foam Preparation

The polyurethane or polyisocyanurate polymer prepared according to the process of this invention is in certain non-limiting embodiments a rigid, foamed, closed-cell polymer. Such a polymer is typically prepared by intimately mixing the reaction components, i.e., a polyol/blowing agent component (consisting essentially of or comprising the formulated polyol and blowing agent defined hereinabove), along with an isocyanate component, i.e., at least two streams; or a polyol component (consisting essentially of or comprising the formulated polyol defined hereinabove), a blowing agent component, and an isocyanate component, i.e., at least three streams, wherein for example the formulated polyol and blowing agent component mix just prior to contact thereof with the isocyanate component) at room temperature or at a slightly elevated temperature for a short period. Additional streams may be included, as desired, for the introduction of various catalysts and other additives. Mixing of streams may be carried out either in a high pressure or a low pressure apparatus, a mixhead with or without a static mixer for combining the streams, and then depositing the reacting mixture onto a substrate. This substrate may be, for example, a layer of similar or dissimilar polyurethane or polyisocyanurate, a conveyor belt, a rigid or flexible facing sheet made of foil or another material, including another layer of similar or dissimilar polyurethane or polyisocyanurate which is being conveyed, continuously or discontinuously, along a production line, or directly onto a conveyor belt. A type of facing material specifically included in the scope of the embodiments of the invention is a thin metal sheet, for instance made of steel optionally coated with a suitable material such as a polyester or an epoxy resin in order to slow down the rust formation process.

In alternative embodiments the reacting mixture may be poured into an open mold or distributed via laydown equipment into an open mold or simply deposited at or into a location for which it is destined, i.e., a pour-in-place application, such as between the interior and exterior walls of a structure. In the case of deposition inside a mold on a facing sheet, a second sheet may be applied on top of the deposited mixture. In other embodiments, the mixture may be injected into a closed mold, with or without vacuum assistance for cavity-filling. Both when a mold is employed as well as when a continuous production line is employed, the mold or the continuous production line are typically heated in order to facilitate the polyol-isocyanate reaction process.

In general, such applications may be accomplished using the known one-shot, prepolymer or semi-prepolymer techniques used together with conventional mixing methods. The mixture, on reacting, takes the shape of the mold or adheres to the substrate to produce a polyurethane or polyisocyanurate polymer of a more-or-less predefined structure, which is then allowed to cure in place or in the mold, either partially or fully. Suitable conditions for promoting the curing of the polymer include a temperature of typically from 20°C to 150°C, such as from 35°C to 75°C or from 40°C to 70°C. The curing temperatures may be obtained by heating the mold, and/or it may be obtained internally from the exothermic reaction conditions. Such temperatures will usually permit the sufficiently cured polymer to be removed from the mold, where such is used, or from the production line, typically within from about 3 to 20 minutes and more typically within from 4 to 15 minutes after mixing of the reactants. Optimum cure conditions will depend upon the particular components, including catalysts and quantities used in preparing the polymer and also the size and shape of the article manufactured.

The result may be a rigid foam in the form of slabstock, a molding, a filled cavity, including but not limited to a pipe or insulated wall or hull structure, a sprayed foam, a frothed foam, or a continuously- or discontinuously-manufactured laminate product, including but not limited to a laminate or laminated product formed with other materials, such as hardboard, plasterboard, plastics, paper, metal, or a combination thereof. Advantageously, the foams prepared according to embodiments of the present invention may show improved processability when compared with foams from formulations and preparation methods that are similar except that the formulations do not comprise the specific formulated polyol used in the present invention. As used herein, the term "improved processability" refers to the capability of the foam to exhibit reduced defects, which may include but are not limited to shrinkage and deformation. This improvement may be particularly advantageous when embodiments of the invention are used in the manufacture of sandwich panels. Sandwich panels may be defined, in some embodiments, as comprising at least one relatively planar layer (i.e., a layer having two relatively large dimensions and one relatively small dimension) of the rigid foam, faced on each of its larger dimensioned sides with at least one layer, per such side, of flexible or rigid material, such as a foil or a thicker layer of a metal or other structure-providing material. Such a layer may, in certain embodiments, serve as the substrate during formation of the foam.

In addition, the polyisocyanurate and polyurethane foams of embodiments of the invention may exhibit improved curing properties, including improved green compressive strength. Testing to determine green compressive strength is described in the footnotes to Table 1. This feature may be particularly advantageous when embodiments of the invention are employed to produce insulated sandwich panels.

The description hereinabove is intended to be general and is not intended to be inclusive of all possible embodiments of the invention. Similarly, the examples hereinbelow are provided to be illustrative only and are not intended to define or limit the invention in any way. Those skilled in the art will be fully aware that other embodiments, within the scope of the claims, will be apparent, from consideration of the specification and/or practice of the invention as disclosed herein. Such other embodiments may include selections of specific components and proportions thereof; mixing and reaction conditions, vessels, deployment apparatuses, and protocols; performance and selectivity; identification of products and by-products; subsequent processing and use thereof; and the like; and those skilled in the art will recognize that such may be varied within the scope of the claims appended hereto.

### EXAMPLES

Materials employed in the examples and/or comparative examples include the following, given in alphabetical order.
**CURITHANE 52** is glycine, N-[(2-hydroxy-5-nonylphenyl)methyl]-N-methyl-monosodium salt in diethylene glycol available from Air Products and Chemicals, Inc.
**DABCO K15** is a potassium octoate in diethylene glycol catalyst, available from Air Products and Chemicals, Inc..
**IP 585** is Polyol IP 585, an aromatic resin-initiated polyoxypropylene-polyoxyethylene polyol (Novolac-type polyol) with hydroxyl number of 195 mg KOH/g, an equivalent weight of 286, and average functionality of 3.3, available from The Dow Chemical Company.
**NIAX A-1** is a 70% bis(2dimethyl aminoethyl)ether and 30% dipropylene glycol catalyst available from Momentive Performance Materials.
**NIAX L-6633** is a silicone based surfactant available from Momentive Performance Materials.
**POLYCAT 8** is an N,N-dimethylcyclohexyl amine, available from Air Products and Chemicals, Inc.
**Polyester 1** is a polyester based upon terephthalic acid, diethylene glycol, and PEG200, and is made as described in WO/2010/015642, and has a hydroxyl number of 240, a nominal functionality of 2, and an equivalent weight of 234.
**PEG 400** is polyethylene glycol having an average molecular weight of about 400.
**TCPP** is tris(chloroisopropyl)phosphate, available from Albemarle.
**VORANATE M600** is a high viscosity crude diphenylmethane diisocyanate (viscosity about 600 mPas at 25°C), available from The Dow Chemical Company. **VORANOL 280** is a high functionality (6.9) sucrose/glycerine initiated polyol, equivalent weight about 200, OH number of 280, and a number average molecular weight of 1402, available from The Dow Chemical Company.
**VORANOL RN 482** is a sorbitol-initiated polyoxypropylene polyether polyol, having a hydroxyl number of 482, a nominal functionality of 6, and an equivalent weight of 117, available from The Dow Chemical Company.

### Example 1 and Comparative Example 2

Two formulated polyols are prepared, including the components listed in Table 1 (amounts are listed in parts by weight). First a polyol side is prepared by mixing the polyol side components. The mixture is then reacted with an isocyanate (VORANATE^{™} M600) and n-pentane, at an index of 280, to form a free rise foam. Curing properties are tested by measuring green compressive strength at four (4) minutes, and the results are also shown in Table 1.

| | Example 1 | Example 2 | Comparative Example 2 |
|---|---|---|---|
| POLYOL SIDE | | | |
| Polyester 1 | 20.23 | 43.95 | 45.2 |
| IP 585 | 29.18 | 15 | |
| VORANOL RN 482 | 9.73 | 13 | |
| VORANOL 280 | | | 10.4 |
| PEG 400 | 12.65 | | 17.3 |
| TCPP | 21.13 | 21 | 20.57 |
| CURITHANE 52 | 1.75 | 1.7 | 1.7 |
| DABCO K15 | 1 | 1 | 0.76 |
| NIAX A-1 | 0.56 | 0.58 | |
| NIAX L-6633 | 3 | 3 | 3 |
| POLYCAT 8 | | | |
| Water | 0.77 | 0.77 | 0.77 |
| | | | |
| Polyol Side, Total Parts | 100 | 100 | 100 |
| Polyol side, average functionality* | 2.9 | 2.8 | 2.3 |
| | | | |
| VORANATE M600 per 100 parts polyol | 168.5 | 170 | 159.6 |
| Index | 280 | 280 | 280 |
| | | | |
| n-pentane | 12.1 | 12.1 | 11.7 |
| Free rise density | about 36 | about 36 | about 36 |
| GCS ** (kPa) | 150 | 145 | 110 |

| | | | |
|---|---|---|---|
| * average functionality based on the combination of Polyester 1, IP 585, VORANOL RN 482, and PEG 400 for Example 1, the combination of Polyester 1, IP 585, and VORANOL RN 482, for Example 2, and the combination of Polyester 1, VORANOL 280, and PEG 400 for Comparative Example 3. **GCS (green compressive strength): This is measured on free rise foam produced inside a wooden box (20x20x20cm), removed 2 minutes after reaction initiation, and placed (perpendicular to rise) on a 5x5cm wood piece that is held on the lower plate of a 10 kN Instron instrument. The upper Instron plate is moved at 4 minutes to press the foam at constant speed (20 mm per minute) towards the indentation wood piece. The obtained GCS value is expressed in kPa. | | | |

It is seen that Example 1 and Example 2 show improved curing (green compressive strength, GCS test).

## Claims

1. A polyurethane or polyisocyanurate foam formulation comprising:
(a) a formulated polyol comprising
(i) from 20 to 60 percent by weight of an aromatic polyester polyol having a hydroxyl number greater than 50 mg KOH/g, a functionality of at least 2 and an acid component comprising at least 30 percent by weight of phthalic acid residues, or residues of isomers thereof;
(ii) from 10 to 30 percent by weight of a Novolac-type polyether polyol having a hydroxyl number greater than 100 mg KOH/g and a functionality of at least 2.2; and
(iii) from 5 to 40 percent by weight of a polyether polyol including a sucrose- or sorbitol-initiated polyol, having an average hydroxyl number greater than 200 mg KOH/g and an average functionality of at least 4;
all percentages being based on the weight of the formulated polyol as a whole, and wherein components (i), (ii), and (iii) are selected so that the formulated polyol as a whole has an average functionality of at least 2.4,
(b) a polyisocyanate; and
(c) a blowing agent;
such that the isocyanate index is above 270.

2. The formulation of Claim 1 wherein the aromatic polyester polyol is obtained by the transesterification of crude reaction residues or scrap.

3. The formulation of Claim 1 wherein aromatic polyester polyol has a hydroxyl number ranging from greater than 50 mg KOH/g to 400 mg KOH/g.

4. The formulation of Claim 3 wherein the hydroxyl number ranges from 150 to 300.

5. The formulation of Claim 1 wherein the aromatic polyester polyol has a functionality ranging from 2 to 8.

6. A polyurethane or polyisocyanurate foam prepared from the formulation of Claim 1.

7. A method of preparing a polyurethane or polyisocyanurate foam comprising contacting, under foam-forming conditions,
(a) a formulated polyol comprising
(i) from 20 to 60 percent by weight of an aromatic polyester polyol having a hydroxyl number greater than 50 mg KOH/g, a functionality of at least 2 and an acid component comprising at least 30 percent by weight of phthalic acid residues, or residues of isomers thereof;
(ii) from 10 to 30 percent by weight of a Novolac-type polyether polyol having a hydroxyl number greater than 100 mg KOH/g and a functionality of at least 2.2; and
(iii) from 5 to 40 percent by weight of a polyether polyol including a sucrose- or sorbitol-initiated polyol, having an average hydroxyl number greater than 200 mg KOH/g and an average functionality of at least 4;
all percentages being based on the weight of the formulated polyol as a whole, and wherein components (i), (ii), and (iii) are selected so that the formulated polyol as a whole has an average functionality of at least 2.4;
(b) a polyisocyanate; and
(c) a blowing agent;
at an isocyanate index of more than 270; to form a rigid polyurethane or polyisocyanurate foam.

8. The method of Claim 7 wherein the formulated polyol, polyisocyanate and blowing agent are contacted as two streams, three streams, or more than three streams.

9. The method of Claim 8 wherein the mixed streams are sprayed or deposited onto a substrate.

10. The method of Claim 9 wherein the substrate is selected from the group consisting of a rigid facing sheet, a flexible facing sheet, a layer of similar or dissimilar polyurethane or polyisocyanurate, or a conveyor belt.

11. The method of Claim 10 wherein a sandwich panel is formed.

12. A polyurethane or polyisocyanurate foam formed by the method of Claim 8.

13. The foam of Claim 12 wherein the foam is a layer in a sandwich panel.

14. The foam of Claim 13 further comprising at least one rigid facing sheet, at least one flexible facing sheet, at least one layer of similar or dissimilar polyurethane or polyisocyanurate, or a combination thereof.

## Patentansprüche

1. Eine Polyurethan- oder Polyisocyanuratschaumformulierung, beinhaltend:
(a) ein formuliertes Polyol, beinhaltend
(i) zu 20 bis 60 Gewichtsprozent ein aromatisches Polyesterpolyol mit einer Hydroxylzahl von mehr als 50 mg KOH/g, einer Funktionalität von mindestens 2 und einer Säurekomponente, beinhaltend mindestens 30 Gewichtsprozent Phthalsäurereste oder Reste von Isomeren davon;
(ii) zu 10 bis 30 Gewichtsprozent ein novolakartiges Polyetherpolyol mit einer Hydroxylzahl von mehr als 100 mg KOH/g und einer Funktionalität von mindestens 2,2; und
(iii) zu 5 bis 40 Gewichtsprozent ein Polyetherpolyol, umfassend ein saccharose- oder sorbitolinitiiertes Polyol, mit einer mittleren Hydroxylzahl von mehr als 200 mg KOH/g und einer mittleren Funktionalität von mindestens 4;
wobei sich alle Prozentsätze auf das Gewicht des formulierten Polyols als Ganzes beziehen und wobei die Komponenten (i), (ii) und (iii) so ausgewählt sind, dass das formulierte Polyol als Ganzes eine mittlere Funktionalität von mindestens 2,4 aufweist,
(b) ein Polyisocyanat; und
(c) ein Treibmittel;
sodass der Isocyanat-Index über 270 liegt.

2. Formulierung gemäß Anspruch 1, wobei das aromatische Polyesterpolyol durch die Umesterung von rohen Reaktionsresten oder -abfall erhalten wird.

3. Formulierung gemäß Anspruch 1, wobei das aromatische Polyesterpolyol eine Hydroxylzahl im Bereich von mehr als 50 mg KOH/g bis 400 mg KOH/g aufweist.

4. Formulierung gemäß Anspruch 3, wobei die Hydroxylzahl im Bereich von 150 bis 300 liegt.

5. Formulierung gemäß Anspruch 1, wobei das aromatische Polyesterpolyol eine Funktionalität im Bereich von 2 bis 8 aufweist.

6. Ein Polyurethan- oder Polyisocyanuratschaum, zubereitet aus der Formulierung gemäß Anspruch 1.

7. Ein Verfahren zur Zubereitung eines Polyurethan- oder Polyisocyanuratschaums, beinhaltend das In-Kontakt-Bringen, unter schaumbildenden Bedingungen,
(a) eines formulierten Polyols, beinhaltend
(i) zu 20 bis 60 Gewichtsprozent ein aromatisches Polyesterpolyol mit einer Hydroxylzahl von mehr als 50 mg KOH/g, einer Funktionalität von mindestens 2 und einer Säurekomponente, beinhaltend mindestens 30 Gewichtsprozent Phthalsäurereste oder Reste von Isomeren davon;
(ii) zu 10 bis 30 Gewichtsprozent ein novolakartiges Polyetherpolyol mit einer Hydroxylzahl von mehr als 100 mg KOH/g und einer Funktionalität von mindestens 2,2; und
(iii) zu 5 bis 40 Gewichtsprozent ein Polyetherpolyol, umfassend ein saccharose- oder sorbitolinitiiertes Polyol, mit einer mittleren Hydroxylzahl von mehr als 200 mg KOH/g und einer mittleren Funktionalität von mindestens 4;
wobei sich alle Prozentsätze auf das Gewicht des formulierten Polyols als Ganzes beziehen und wobei die Komponenten (i), (ii) und (iii) so ausgewählt sind, dass das formulierte Polyol als Ganzes eine mittlere Funktionalität von mindestens 2,4 aufweist,
(b) eines Polyisocyanats; und
(c) eines Treibmittels;
bei einem Isocyanat-Index von mehr als 270; um einen Polyurethan- oder Polyisocyanurathartschaum zu bilden.

8. Verfahren gemäß Anspruch 7, wobei das formulierte Polyol, das Polyisocyanat und das Treibmittel als zwei Ströme, drei Ströme oder mehr als drei Ströme in Kontakt gebracht werden.

9. Verfahren gemäß Anspruch 8, wobei die gemischten Ströme auf ein Substrat gesprüht oder auf dieses aufgebracht werden.

10. Verfahren gemäß Anspruch 9, wobei das Substrat ausgewählt ist aus der Gruppe, bestehend aus einer steifen Verkleidungsbahn, einer biegsamen Verkleidungsbahn, einer Schicht aus gleichartigem der nicht gleichartigem Polyurethan oder Polyisocyanurat oder einem Förderband.

11. Verfahren gemäß Anspruch 10, wobei eine Verbundplatte gebildet wird.

12. Ein Polyurethan- oder Polyisocyanuratschaum, der durch das Verfahren gemäß Anspruch 8 gebildet ist.

13. Schaum gemäß Anspruch 12, wobei der Schaum eine Schicht in einer Verbundplatte ist.

14. Schaum gemäß Anspruch 13, weiterhin beinhaltend mindestens eine steife Verkleidungsbahn, eine biegsame Verkleidungsbahn, mindestens eine Schicht aus ähnlichem oder unähnlichem Polyurethan oder Polyisocyanurat oder eine Kombination davon.

## Revendications

1. Une formulation de mousse de polyuréthane ou polyisocyanurate comprenant :
(a) un polyol formulé comprenant
(i) de 20 à 60 pour cent en poids d'un polyol de polyester aromatique ayant un indice d'hydroxyle supérieur à 50 mg KOH/g, une fonctionnalité d'au moins 2 et un constituant acide comprenant au moins 30 pour cent en poids de résidus d'acide phtalique, ou de résidus d'isomères de celui-ci ;
(ii) de 10 à 30 pour cent en poids d'un polyol de polyéther de type Novolac ayant un indice d'hydroxyle supérieur à 100 mg KOH/g et une fonctionnalité d'au moins 2,2 ; et
(iii) de 5 à 40 pour cent en poids d'un polyol de polyéther incluant un polyol initié par sucrose ou sorbitol, ayant un indice d'hydroxyle moyen supérieur à 200 mg KOH/g et une fonctionnalité moyenne d'au moins 4 ;
les pourcentages étant tous rapportés au poids du polyol formulé dans son intégralité, et dans laquelle les constituants (i), (ii), et (iii) sont sélectionnés de sorte que le polyol formulé dans son intégralité ait une fonctionnalité moyenne d'au moins 2,4,
(b) un polyisocyanate ; et
(c) un agent soufflant ;
de telle sorte que l'indice d'isocyanate soit supérieur à 270.

2. La formulation de la revendication 1 dans laquelle le polyol de polyester aromatique est obtenu par transestérification de résidus ou de déchets de reaction bruts.

3. La formulation de la revendication 1 dans laquelle le polyol de polyester aromatique a un indice d'hydroxyle compris dans la gamme allant de plus de 50 mg KOH/g à 400 mg KOH/g.

4. La formulation de la revendication 3 dans laquelle l'indice d'hydroxyle est compris dans la gamme allant de 150 à 300.

5. La formulation de la revendication 1 dans laquelle le polyol de polyester aromatique a une fonctionnalité comprise dans la gamme allant de 2 à 8.

6. Une mousse de polyuréthane ou de polyisocyanurate préparée à partir de la formulation de la revendication 1.

7. Une méthode de préparation d'une mousse de polyuréthane ou polyisocyanurate comprenant la mise en contact, dans des conditions de formation de mousse,
(a) d'un polyol formulé comprenant
(i) de 20 à 60 pour cent en poids d'un polyol de polyester aromatique ayant un indice d'hydroxyle supérieur à 50 mg KOH/g, une fonctionnalité d'au moins 2 et un constituant acide comprenant au moins 30 pour cent en poids de résidus d'acide phtalique, ou de résidus d'isomères de celui-ci ;
(ii) de 10 à 30 pour cent en poids d'un polyol de polyéther de type Novolac ayant un indice d'hydroxyle supérieur à 100 mg KOH/g et une fonctionnalité d'au moins 2,2 ; et
(iii) de 5 à 40 pour cent en poids d'un polyol de polyéther incluant un polyol initié par sucrose ou sorbitol, ayant un indice d'hydroxyle moyen supérieur à 200 mg KOH/g et une fonctionnalité moyenne d'au moins 4 ;
les pourcentages étant tous rapportés au poids du polyol formulé dans son intégralité, et dans laquelle les constituants (i), (ii), et (iii) sont sélectionnés de sorte que le polyol formulé dans son intégralité ait une fonctionnalité moyenne d'au moins 2,4,
(b) d'un polyisocyanate ; et
(c) d'un agent soufflant ;
à un indice d'isocyanate supérieur à 270 ; afin de former une mousse de polyuréthane ou de polyisocyanurate rigide.

8. La méthode de la revendication 7 dans laquelle le polyol formulé, le polyisocyanate et l'agent soufflant sont mis en contact sous la forme de deux flux, trois flux, ou plus de trois flux.

9. La méthode de la revendication 8 dans laquelle les flux mélangés sont pulvérisés ou déposés sur un substrat.

10. La méthode de la revendication 9 dans laquelle le substrat est sélectionné dans le groupe composé d'une feuille frontale rigide, d'une feuille frontale flexible, d'une couche de polyuréthane ou polyisocyanurate similaires ou dissimilaires, ou d'une bande transporteuse.

11. La méthode de la revendication 10 dans laquelle un panneau en sandwich est formé.

12. Une mousse de polyuréthane ou de polyisocyanurate formée par la méthode de la revendication 8.

13. La mousse de la revendication 12 dans laquelle la mousse est une couche dans un panneau en sandwich.

14. La mousse de la revendication 13 comprenant en outre au moins une feuille frontale rigide, au moins une feuille frontale flexible, au moins une couche de polyuréthane ou polyisocyanurate similaires ou dissimilaires, ou une combinaison de celles-ci.
